# EUROPÄISCHE PATENTSCHRIFT

(11) **EP 1 053 119 B1**
(45) Veröffentlichungstag und Bekanntmachung des Hinweises auf die Patenterteilung: **16.06.2004**
(21) Anmeldenummer: 99907502.1
(22) Anmeldetag: 05.02.1999
(51) Int. Cl.: B60J 5/04, B60R 13/02

(54) **TÜRINNENELEMENT**
DOOR INNER ELEMENT
ELEMENT INTERIEUR DE PORTIERE

(30) Priorität: 06.02.1998 DE 19804781
(43) Veröffentlichungstag der Anmeldung: 22.11.2000
(73) Patentinhaber: Carcoustics Tech Center GmbH, 51381 Leverkusen (DE)
(72) Erfinder: BRÜCK, Eduard, D-51381 Leverkusen (DE)
(74) Vertreter: COHAUSZ & FLORACK
(86) Internationale Anmeldenummer: PCT/EP1999/000750
(87) Internationale Veröffentlichungsnummer: WO 1999/039931

(56) Entgegenhaltungen:
- EP-A- 0 425 240
- EP-A- 0 811 516
- WO-A-97/28977
- DE-A- 4 444 406
- DE-A- 19 620 148
- GB-A- 2 201 629

## Beschreibung

Die Erfindung bezieht sich auf ein Türinnenelement für Kraftfahrzeugtüren, zur Anordnung zwischen einer Türaußenseite und einer inneren Verkleidung.

Ein derartiges, der Kraftfahrzeugtür einverleibtes Türinnenelement ist Träger zahlreicher Funktionsteile und deren Befestigungselemente. In der Regel ist das Türinnenelement in Stahlblechausführung. Je nach Grundkonzeption fallen solche Träger dann zu schwer aus. Außerdem bereitet es Aufwand, Durchbrüche abzudichten. Schließlich sind die Formgebungsmöglichkeiten eingeschränkt. Andererseits sind auch in Kunststoff erstellte Türinnenelemente als Träger für Türkomponenten herangezogen worden. Außer einer Gewichtsreduzierung stehen dieser Auswahl Probleme in der Akustikfunktion entgegen; es wird weder eine nennenswerte Dämmung noch Dämpfung erreicht. Auch hinsichtlich einer Wassersperre ist diese Lösung nicht zufriedenstellend. Zur Kompensation solcher Mängel ist man auf Zusatzelemente ausgewiesen wie Folie, Dämpfungsfolie etc.

Die EP 0 811 516 A2 zeigt eine Kraftfahrzeugtür mit einem Türinnenelement, das zwischen einer Türaußenseite und einer Türinnenverkleidung angeordnet ist und randseitig ein umlaufendes Dichtungselement aufweist. Das als Trägerplatte bezeichnete Türinnenelement ist hinsichtlich seines werkstoffmäßigen Aufbaus nicht näher spezifiziert. Es ist jedoch davon auszugehen, dass es sich hier, wie bei den weiteren Teilen der beschriebenen Kraftfahrzeugtür, um ein Stahlblech handelt. So ist beispielsweise in Spalte 5, Zeilen 25 bis 31 darauf hingewiesen, dass ein Schloßträger durch Schweißen fest mit der Trägerplatte verbunden ist. Dies entspricht der üblichen Herstellung eines solchen Türinnenelementes. Ein solches Türinnenelement ist naturgemäß, aufgrund des gewählten Werkstoffes, vergleichsweise schwer.

Zum Stand der Technik wird ferner auf die DE 196 20 148 A1 verwiesen. Dort ist eine Fahrzeugtür beschrieben, welche aus einem Türaußenblech, einem als Aggregatträger bezeichneten Türinnenelement zur Aufnahme von Funktionselementen, einer Innenverkleidungsschale und einer bewegbaren Fensterscheibe besteht. Die Fahrzeugtür weist ferner eine umlaufende, dem Umriss des Aggregatträgers folgende linienförmige Dichtung auf, die zum Türaußenblech hin angeordnet ist und einen Funktionsraum zum Türhohlraum hin feuchtigkeitsabsperrend abdichtet. Der Aggregatträger besteht aus einem massiven thermoplastischen Faserverbundwerkstoff und ist durch Spritzgießen oder Pressen gefertigt. Dieses bekannte Türinnenelement wird in verschiedener Hinsicht, insbesondere in akustischer Hinsicht nicht als zufriedenstellend angesehen.

Ausgehend von dem vorgenannten Stand der Technik ist es Aufgabe der Erfindung, ein herstellungstechnisch einfaches, gebrauchsvorteilhaftes Türinnenelement zu; schaffen.

Diese Aufgabe ist zunächst im Wesentlichen beim Gegenstand des Anspruchs 1 gelöst, wobei darauf abgestellt ist, dass das Türinnenelement im Spritz-Schäumverfahren hergestellt ist und im Hinblick auf einen Querschnitt zwei massive Randschichten und eine geschäumte poröse Mittelschicht aufweist. Kombiniert auch mit der Anbringung des Dichtkörpers sind Tragfunktion und Abdichtfunktion in einem gewichtsmäßig deutlich reduzierten Körper vereint. Es liegen bessere Formgebungsmöglichkeiten vor. Die hieraus sich ergebende Polydirektionalität des im Grunde plattenförmigen Türinnenelements begünstigt die Versteifung desselben. Dabei ist die dem Spritzschäumverfahren zu eigene verglasungsartige Hautbildung ein weiterer Stabilitätsfaktor. Hinzu kommen die guten Dämm- und Dämpfungswirkungen. Auch ist der Übergang zum das Türinnenelement tragenden Konstruktionsteil der Tür, beispielsweise ein rahmenförmiges Türinnenblech, bestens beherrscht, und zwar auch dichtungsmäßig durch den randseitigen Dichtkörpers. Aufgrund der spritzgeschäumten Ausbildung des Türinnenelements liegen beste Voraussetzungen für den in der Haut des Spritzschaumkörpers verhaftbaren Dichtkörper vor. Es handelt sich um eine Elastomerdichtung, die unmittelbar an den Spritzschaumkörper angespritzt ist und so in der vergleichsweise dünnen, hautartigen Schicht des Spritzschaumkörpers fest verankert ist. Die Anspritztemperatur des Elastomermateriales reicht dazu aus, die hautartige Schicht des Spritzschaumkörpers aufzuweichen und das Elastomermaterial sprich den Dichtkörper darin völlig fugenfrei zu halten. Andererseits wird hierdurch auch keine Schädigung des Spritzschaumkörpers verursacht. Zur Erhöhung der Anschmiegefähigkeit kann der Dichtkörper einen durchgehenden Hohlraum aufweisen. Das verringert nicht nur das Gewicht, sondern spart auch Material ein. Weitere Details sind der nicht vorveröffentlichten DE 295 11 492 U entnehmbar, ferner der EP 0836 924 A1 (Anmeldung Nr. 97 115 150.1). Diese Unterlagen werden hiermit vollinhaltlich mit einbezogen, auch zu dem Zweck, Merkmale dieser Unterlagen in Ansprüche vorliegender Anmeldung mit aufzunehmen. Weiter erweist es sich als vorteilhaft, daß an dem Türinnenelement Kabelhalterungen angeformt sind. Solche Vorkehrungen substituieren die entsprechend klassischen Halterungsmittel. Weiter wird vorgeschlagen, daß ein Halterungskragen, zur Halterung eines Lautsprechers, angeformt ist. Der bildet unter Randversteifung des entsprechenden Loches die genügend feste Basis für Befestigungsmittel, wie beispielsweise Schrauben und zugleich eine abgedichtete Übergangsstelle. Weiter erweist es sich als günstig, daß eine Kabeldurchführung ausgeformt ist. Um dabei die Dichtigkeit zwischen dem Kabelstrang und der Kabeldurchführung sicherzustellen, weist die Kabeldurchführung eine Umrandung aus Weichkunststoff (TPE) auf. Auch hier kann in gleicher Weise eine Elastomer-Dichtung mit Hohlraum realisiert sein, so daß eine äußerst elastische Ringmembran vorliegt. Selbst für die Befestigungselemente wie Schrauben etc. ist türinnenelementseitig eine Entsprechung berücksichtigt, indem das Türinnenelement eine eingespritzte Buchse aufweist. In der Regel handelt es sich dabei um eine ein Innengewinde aufweisende Buchse. Die kann wie der oben erläuterte Halterungskragen aus härterem, massivem Kunststoff bestehen. Selbstredend sind Elemente wie die Kabeldurchführungen, die Buchse in die spezielle Konstruktionsgrundform berücksichtigender Vielzahl zugeordnet. Weiter wird vorgeschlagen, daß das Türinnenelement eine eingelegte Trägerplatte zur Halterung eines Motors aufweist. Zweckmäßig handelt es sich um eine solche aus Metall. Die kann schon auf die spezielle Bestückung eingerichtet sein, also paßgerechte Befestigungslöcher oder Klipsvorsprünge aufweisen zur Festlegung der Grundplatte des Motors an einer solchen Trägerplatte. Schließlich wird noch vorgeschlagen, daß das Türinnenelement spritzschäumtechnisch angeformte Brücken aufweist, deren Brückenunterseite freiliegt. Solche schlaufenartigen Gebilde lassen sich hinterfädeln, sei es zum Durchtritt von Kabelsträngen oder sogar eines Bowdenzuges. Endlich ist noch eine die stabilisatorische Seite berührende Lösung erreicht durch einen partiellen Wandungsversatz des Türinnenelements als Legeweg für leistenförmige Einsätze. Es kann sich dabei um die Aufnahme eines Stahlinserts handeln.

Sodann bringt einer Weiterbildung der Erfindung in Vorschlag, daß der Dichtkörper als auf einer Breitfläche des Türinnenelements aufgebrachte Raupe ausgebildet ist. Die läßt sich über einen Roboter präzise legen. Es kommt dabei zu einer Selbstverhaftung der Materialien aneinander, dies gegebenenfalls unter Mitnutzung der noch vorhandenen Wärme des Spritzschaumkörpers. Zweckmäßig liegt der Dichtkörper in einer integral eingeformten Nut ein. Damit letztere keine Schwachstelle bildet, ist die Nut durch Wandungsversatz unter Ausformung einer spritzgeschäumten Wulst auf der Rückseite, der anderen Breitfläche also, gebildet. So kann bspw. bezüglich des in Rede stehenden Gegenstandes eine Gesamtdicke von nur ca. 5 mm zugrundeliegen. Die nutbildende Richtungsänderung des Spritzschaumkörper-Materiales schafft sogar erhöhte Stabilität. Insofern ist die Wulst zugleich Stabilisierungsrippe. Eine hohe Bauteil-Stabilität liegt vor, wenn die Dichte des Türinnenelements über einen Querschnitt unterschiedlich ist, nämlich in einer ungeschäumten Randzone zwischen 0,7 und 1,4 g/cm³ beträgt und in der geschäumten Mittelschicht 0,1 bis 0,6 g/cm³. Die Dichte von kompakten Polymerwerkstoffen beträgt ca. 1 g/cm³. Durch solchen Sandwichaufbau können Bauteile mit hoher Steifigkeit, geringem Gewicht und großem Integrationspotential gefertigt werden. Sodann ist vorgesehen, daß das Spritzschäummaterial einen Anteil eines HMS (high melt strentgh) Polymers auf PP-Basis aufweist. Das erhöht die Schmelzstabilität des Copolymers. Die Basiskomponente selbst liegt bei ca. 90%. Durch dieses strukturisomere Propylenpolymer wird das Verarbeitungsfenster verbreitert und ein stabiles Zellenwachstum bei gleichmäßiger Zellengröße realisiert. Es liegt eine weitestgehend homogene Struktur vor. Sodann wird vorgeschlagen, daß das Spritzschäummaterial Füll- oder Verstärkungsstoffe aufweist. Solche Mittel bringen eine noch weiter erhöhte Steifigkeit der gewichtsmäßig leichten Bauteile. Es kann sich um einen Beischlag von ca. 20% Glasfasern bzw. Talkum handeln. Weiter wird vorgeschlagen, daß stirnflächenseitig Verankerungsdurchbrüche vorgesehen sind, die durch integrales Ausformen eine in Durchbrechungsrichtung liegende massive Lochauskleidung aufweisen. Ein solcher Hülsensteg nimmt beiderends Anschluß an die quer dazu liegenden massiven Randschichten des Türinnenelements. Die Lochauskleidung versteift die Zone, so daß durchtretende Befestigungselemente, wie bspw. selbstschneidende Schrauben etc., Klipse oder dergleichen ausreichend Widerstand trotz geringer Dichte vorfinden. Weiter erweist es sich in diesem Zusammenhang als vorteilhaft, daß ein Verankerungsdurchbruch von einem stirnflächenseitig auskragenden, integral geschäumten Laschenabschnitt umgeben ist. Solche Lappen vergrößern das das Loch umschreibende Feld und bringen mehr "Fleisch". Weiter können auch Vorkehrungen dahingehend getroffen sein, daß in dem Türinnenelement Buchsen, Gewindeeinsätze etc. umspritzt eingebunden sind. Es kann sich dabei um Metalleinsätze handeln. Eine Ausgestaltung von sogar eigenständiger Bedeutung besteht dadurch, daß in dem Türinnenelement breitflächenseitig ein teilweiser Materialabtrag durch Fräsen oder nicht durchgehendes Schneiden vorgenommen ist, unter Schaffung eines Zugangs zur Mittelschicht geringerer Dichte. Hier wird die Durchbrechungsfreiheit des Türinnenelements beibehalten. Lediglich eine der massiven Randschichten erhält ein Fenster, über das der erstrebte Zugang eines Befestigungselements erfolgt. Das kann konkret dadurch verkörpert sein, daß die freigelegten Bereiche der Mittelschicht als Zugang für Verankerungsmittel dient. Schließlich wird noch als für sich bedeutende Lösung vorgeschlagen, daß in dem Türinnenelement Klipse unter Belassung der integralen Außenhaut befestigt sind. Es kann sich hier um in entsprechende zentrumsorientierte Gräben einsenkbare Drehanker handeln, deren sternförmige Ankerarme sich in die Grabenflanken einschneiden.

Der Gegenstand der Erfindung ist nachstehend anhand eines zeichnerisch veranschaulichten Ausführungsbeispieles näher erläutert. Es zeigt:
- Fig. 1: das Türinnenelement in Seitenansicht,
- Fig. 2: einen Schnitt durch eine Kraftfahrzeugtür mit einverleibtem Türinnenelement,
- Fig. 3: eine Herausvergrößerung III-III aus Figur 2, zeigend den randseitigen Dichtkörper zwischen Türinnenelement und einem Türinnenblech der Tür,
- Fig. 4: den Schnitt gemäß Linie IV-IV in Figur 1, zeigend eine Kabelhalterung,
- Fig. 5: den Schnitt gemäß Linie V-V in Figur 1, zeigend eine Kabeldurchführung mit Führungskragen,
- Fig. 6: den Schnitt gemäß Linie VI-VI in Figur 1, veranschaulichend eine Kabeldurchführung mit Umrandung,
- Fig. 7: den Schnitt gemäß Linie VII-VII in Figur 1, eine eingespritzte Buchse wiedergebend,
- Fig. 8: den Schnitt gemäß Linie VIII-VIII in Figur 1, einen eingeformten Halterungskragen verdeutlichend mit in strichpunktierter Linienart wiedergegebenem Lautsprecher,
- Fig. 9: den Schnitt gemäß Linie IX-IX in Figur 1, eine Trägerplatte zur Halterung eines Motors darstellend,
- Fig. 10: den Schnitt gemäß Linie X-X in Figur 1, verkörpernd eine Brückenzone zur Halterung beispielsweise eines Bowdenzuges,
- Fig. 11: eine Variante des Türinnenelements in Seitenansicht,

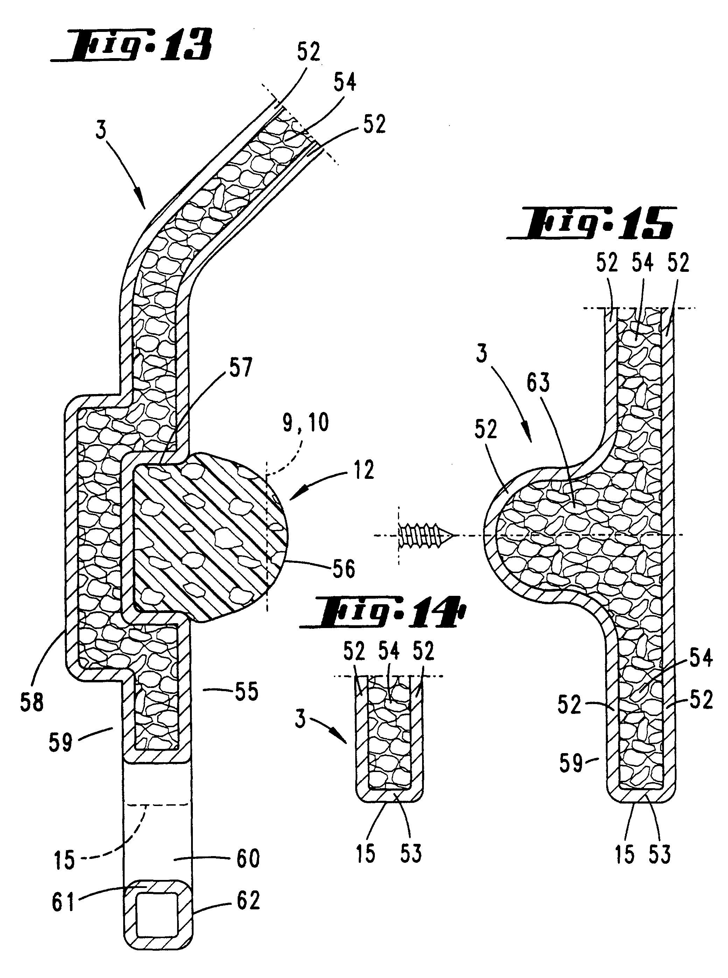

- Fig. 12: eine Stirnansicht hierzu,
- Fig. 13: den Schnitt gemäß Linie XIII-XIII in Fig. 11, vergrößert, die Zuordnung des Dichtkörpers und die Ausbildung eines Verankerungsdurchbruches wiedergebend,
- Fig. 14: den Schnitt gemäß Linie XIV-XIV in Fig. 11, gleichfalls vergrößert und die periphere Stirnfläche zeigend, und zwar als Fortsetzung der massiven Randschicht,
- Fig. 15: einen bezüglich der Mittenschicht stärker angehäuften Bereich am Türinnenelement, z.B. "Fleisch" für Verschraubungen bietend,
- Fig. 16: einen Querschnitt durch das Türinnenelement, bildend eine Verankerungszone,
- Fig. 17: das zugehörige Verankerungsmittel,
- Fig. 18: eine Draufsicht aus Fig. 16 bei zuordnungskorrekter Ausrichtung des Verankerungsmittels, vor dem Verankern,
- Fig. 19: einen der Fig. 16 entsprechenden Schnitt bei betriebsgerecht zugeordnetem Verankerungsmittel,
- Fig. 20: einen Schnitt durch das Türinnenelement, weiter vergrößert,
- Fig. 21: eine der Fig. 16 entsprechende Darstellung, anwendend einen materialabtragenden Vorgang für die Befestigungszugänglichkeit des Verankerungsmittels,
- Fig. 22: dasselbe bei betriebsgerecht zugeordnetem Verankerungsmittel,
- Fig. 23: eine Draufsicht auf Fig. 22 mit in strichpunktiert angedeuteter Linienart wiedergegebener Verankerung.

Die in Figur 2 im Vertikalschnitt dargestellte Kraftfahrzeugtür 1 nimmt in ihrem Hohlraum 2 ein Türinnenelement 3 auf. Das erstreckt sich bei montierter Tür im wesentlichen vertikal.

Das Türinnenelement 3 ist der Öffnung 4 eines rahmenförmigen Türinnenblechs 5 zugeordnet. Es verschließt diese Öffnung 4 vollständig und dichtet sie zugleich ab.

Das den Hohlraum 2 nach außen verschließende Türaußenblech ist mit 6 bezeichnet.

Einen fahrraumseitigen Abschluß bildet eine den Hohlraum 2 nach dorthin (Fahrraum) abschließende Verkleidung 7. Letztere kann eine auf dieser Seite liegende Einlage 8 überfangen, ein sogenanntes Padding.

Der Rand der Öffnung 4 ist als zur Türaußenseite gehende Abstufung 9 realisiert, bildend eine durchgehend umlaufende Tragschulter 10. Daran findet die Peripherie des Türinnenelements 3 ihre satte Abstützung. Der diesbezügliche Rand trägt das Bezugszeichen 11.

Die Abstützung geschieht unter Zwischenlage eines Dichtkörpers 12. Der ist dem Türinnenelement 3 bei Herstellung im Spritzschäumverfahren randseitig gleich angeformt. Die Abdichtwirkung gegenüber der umrißentsprechend verlaufenden Tragschulter 10 ist erhöht durch Ausbildung eines Hohlraumes 13 des dichtaktiven Abschnitts des Dichtkörpers 12. Es handelt sich um eine Elastomerdichtung mit durchgehendem Hohlraum 13. Der Hohlraum 13 wird im gleichzeitig stattfindenen Gasinjektionsverfahren erzeugt. Das entsprechende Fluid läßt sich über eine oder mehrere Kanülen zuführen. Deren Stechlöcher können sich selbst schließen.

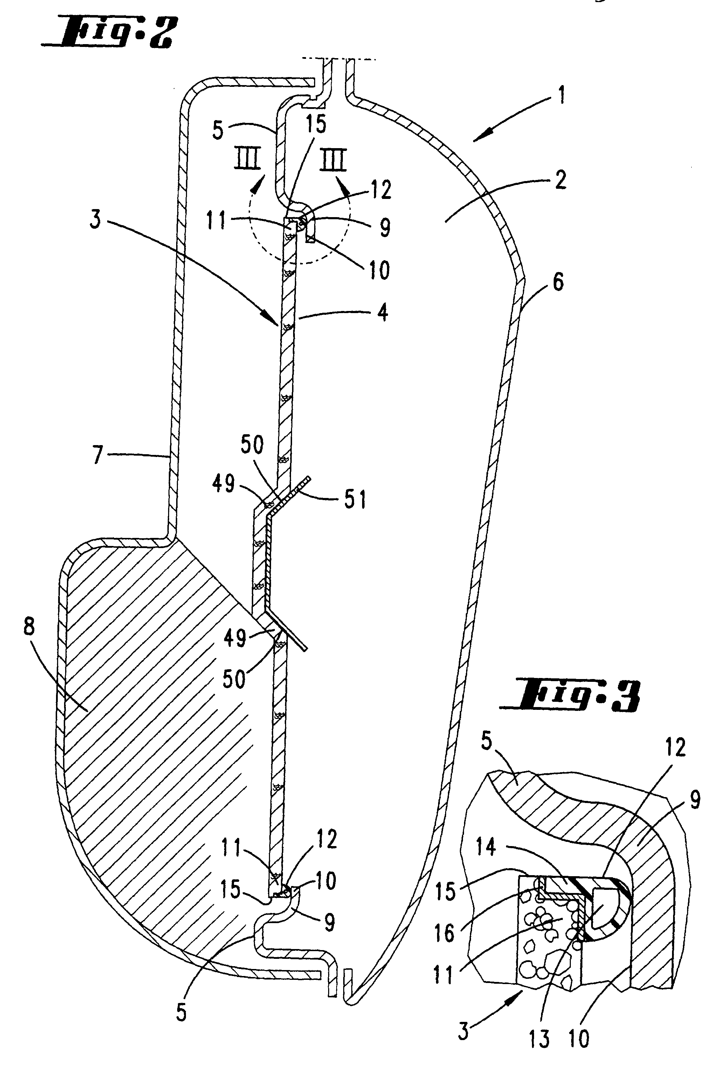

Der dem Rand 11 zugewandte Befestigungsfuß 14 des Dichtkörpers 12 übergreift die der Türaußenseite zugewandte Eckzone des Randes 11. Selbstredend kann der über die Stirnseite gehende Abschnitt des hier winkelförmigen Befestigungsfußes 14 die ganze Stirnfläche 15 des Randes 11 überfangen bzw. verankert sein. Wie die Lupendarstellung Figur 3 zeigt, besteht dabei, über die ganze Kontaktzone gehend, eine hautartige Schicht 16. Die ist von dem Elastomermaterial nicht durchstoßen. Sie bildet gleichsam eine Verhaftungsschicht.

Bezüglich des Türmoduls sprich Türinnenelements 3 ist als Material einsetzbar: PP, PA, ABS oder PET und Treibmittel (endotherm oder exotherm) zur Schäumung. Aufgeschäumt wird auf ca. 50% der Ausgangsdichte. In ein und demselben Aufschäumvorgang erhält das Türinnenelement 3 seine endgültige Gestalt und Ausrüstung, wie weiter unten erklärt. Für den Dichtkörper 12 eignet sich als Material: TPE (TPE-V oder SEBS). Dieses Material wird auch für die weiter unten erklärten Durchbrüche etc. verwendet.

Ein beispielsweise im Zwei-Farb-Spritzgießen erzeugtes Türinnenelement 3 läßt die Vorteile eines Umformprozesses bestens nutzen. Es lassen sich komplizierte Geometrien und Wanddickenveränderungen realisieren und zugleich weitere Elemente zuordnen. Das Türinnenelement 3 ist leicht, stabil und dämmend bzw. dämpfend.

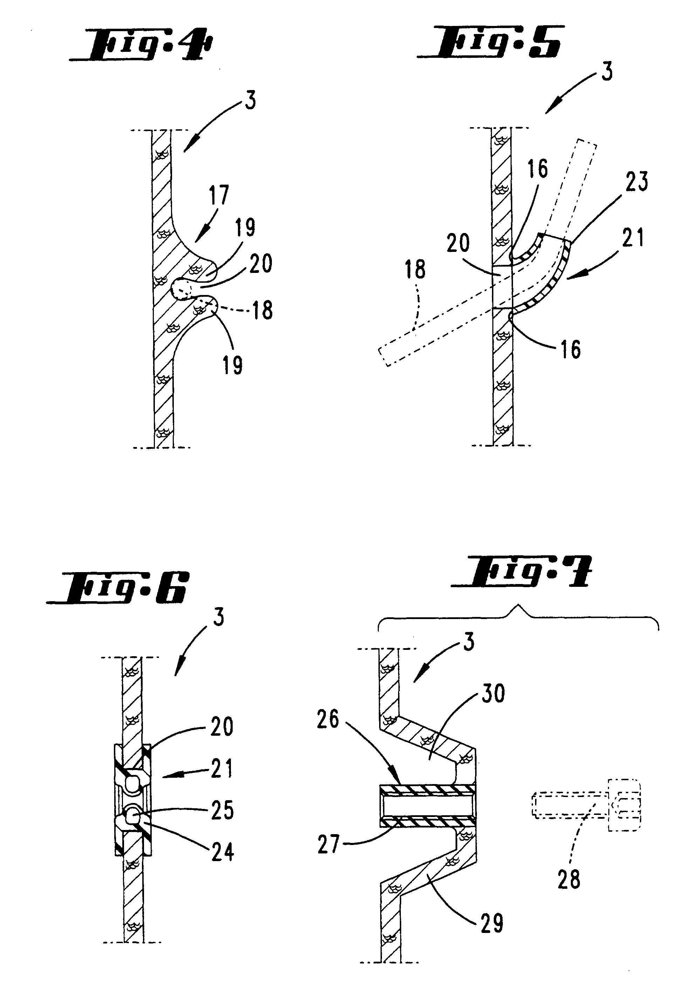

An dem Türinnenelement 3 sind Kabelhalterungen 17 angeformt. Das Kabel ist mit 18 bezeichnet (vergleiche Figur 4). Konkret handelt es sich um zwei freistehende, federfähige Schenkel 19. Die stehen quer aus der allgemeinen Plattenebene des Türinnenelements 3 ab. Der Schenkelfuß verbreitert sich zum Plattenkörper hin. Die quer offene Stecköffnung 20 der Kabelhalterung 17 weist einen leichten Hinterschneidungsverlauf auf, so daß eine ausgezeichnete Klipshalterung erreicht wird.

Figur 5 zeigt im Gegensatz zu einem aufliegenden Verlauf des Kabels 18 einen den Plattenkörper querenden Verlauf des Kabels 18. Hierzu ist eine Kabeldurchführung 21 realisiert. Die umfaßt ein Loch 22 im Plattenkörper und einen gebogen verlaufenen Dichtungsstutzen 23. Der verjüngt sich zu seinem freien Ende hin bis auf das Querschnittsmaß des Kabels 18 bzw. darunter, so daß Dichtigkeit gegeben ist. Der Dichtungsstutzen 23 kann aus dem gleichen Material bestehen wie der Dichtkörper 12. Das Anformen an der verglasten, bzw. eine Harthaut aufweisenden Außenseite des Türinnenelements 3 ist optimal, auch hier unter Verankerung in einer hautartigen Schicht 16. Der Dichtungstutzen 23 kann auch statt Einnahme einer dort dargestellten Bogenform senkrecht zur allgemeinen Ebene des Türinnenelements 3 stehen und dann gegebenenfalls in einen wahlweisen Richtungsverlauf des Kabels 18 gebogen werden.

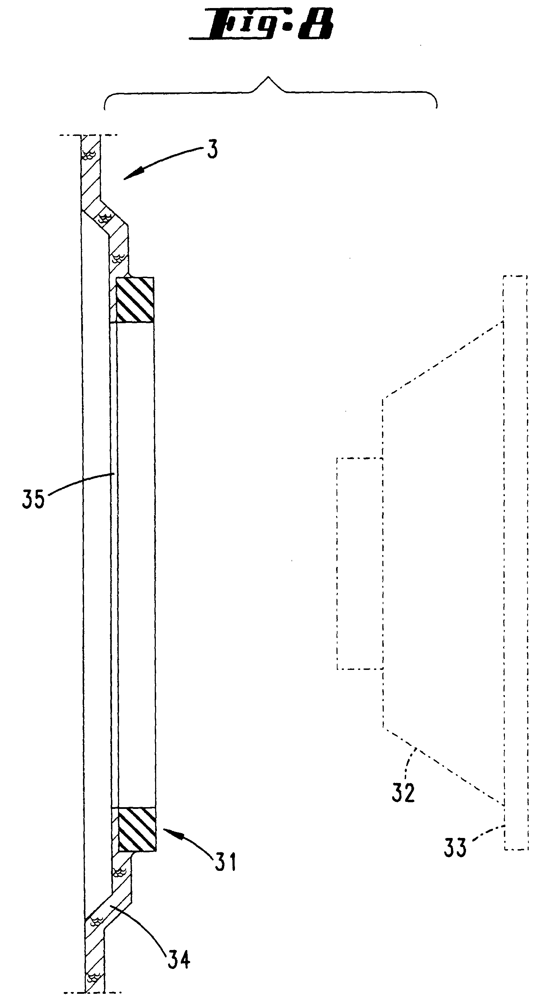

Die in Figur 6 wiedergegebene Kabeldurchführung 21 verzichtet auf eine freiragende, stutzen- bzw. tüllenförmige Gestalt zugunsten einer Auskleidung des dortigen Loches 22 in der Dicke des Elements 1. Hier ist die Kabeldurchführung 21 von einer Umrandung 24 aus Weichkunststoff gebildet, zweckmäßig unter Verwendung des bezüglich des Dichtkörpers 12 eingesetzten Materiales, und zwar unter identischen Anbindungsbedingungen wie dort erklärt. Auch ein umlaufender Hohlraum 25 findet Berücksichtigung. Es liegt praktisch eine lochausfüllende Ringmembran vor, deren zentrale Öffnung sich durch Einführen des Kabels 18 daran dicht anschmiegend weitet.

Aus Figur 7 ist die spritztechnische Zuordnung einer Buchse 26 erkennbar. Es handelt sich um eine solche mit Innengewinde 27 für eine das entsprechende Außengewinde aufweisende Schraube als Befestigungselement 28. Besagte Buchse 26 erstreckt sich quer zum allgemeinen Ebenenverlauf des Türinnenelements 3, und zwar in einer trapezförmigen Geometrie 29 liegend. Sie (26) wurzelt in der schmaleren Kopffläche des Trapezes und ragt in den durch Wandungsversatz realisierten Rinnenraum 30, den das Befestigungselement 28 nach auswärts hin längenmäßig nicht überschreitet. Der freie Stirnrand der Buchse 26 fluchtet vielmehr mit der linksseitigen Außenseite des Türinnenelements 3.

Figur 8 gibt einen Halterungskragen 31 wieder. Der dient zum Anflanschen eines in strichpunktierter Linienart dargestellten Lautsprechers 32. Letzterer besitzt einen Halteflansch 33. Der Lautsprecher 32 überhaupt ist auf eine randtragende Zuordnung am exponierten Halterungskragen 31 maßlich abgestimmt. Bezüglich des Halterungskragens 31 kann es sich um Hart-PVC handeln.

Die exponierte Lage des hier ringförmigen Halterungskragens 31 beruht auf einer kegelstumpfförmigen Geometrie 34 eines randnahen Abschnitts des Türinnenelements 3. Der Halterungskragen 31 weist rechteckigen bzw. gegebenenfalls auch quadratischen Querschnitt auf. Seine dem Plattenkörper des Türinnenelements 3 zugewandte äußere Randkante ist eingebettet, und zwar plattenparallel auf ganzer Ringquerschnittsbreite und quer dazu auf halber Ringdicke. Es liegen hier die gleichen oben beschriebenen Verhaftungswirkungen vor. Das so stabil eingefaßte Loch 35 des Türinnenelements 3 schließt ebenengleich mit der Innenseite des Halterungskragens 31 ab.

Der hier rotationssymmetrisch verlaufenden Wandungsversatz zur Schaffung der kegelstumpfförmigen Geometrie 34 stabilisiert das Umfeld des Halterungskragens 31.

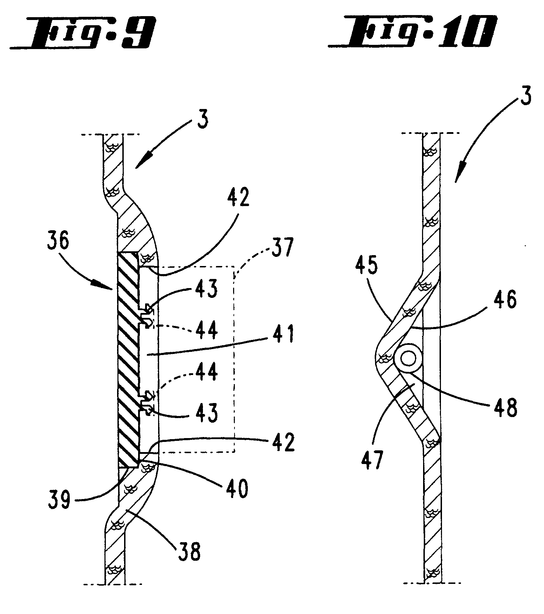

Eine weitere Ausgestaltung ergibt sich aus Figur 9, und zwar dahingehend, daß dort, wiederum in einer ebenenversetzten Zone des Plattenkörpers des Türinnenelements 3 ein Teil zugeordnet ist. Es handelt sich hier um eine eingelegte Trägerplatte 36. Die bildet eine tragstabile Basis für einen in strichpunktierter Linienart angedeuteten Motor 37. Der in Figur 9 nach rechts gehende Wandungsversatz des Plattenkörpers des Türinnenelements 3 ist mit 38 bezeichnet. Er berücksichtigt eine der Plattenkontur entsprechende Vertiefung 39. Die beläßt im exponierten Bereich eine Randschulter 40. Letztere endet vor einer fensterförmigen Durchbrechung 41, so daß der Motor 37 eine ausgezeichnete Randabstützung bei 42 erfährt.

Die dargestellte Trägerplatte 36 weist Patrizenvorsprünge 43 auf, welche eine Matrizenöffnung 44 schnäpperartig hintergreifen. Es kann sich um eine irreversible Schnappverbindung handeln. Die Patrizenvorsprünge 43 sind pilzförmige Verhakungselemente, die hinter Schultern der Matrizenöffnung schnappen.

Es kann sich bezüglich der Trägerplatte 36 um eine Metallplatte handeln.

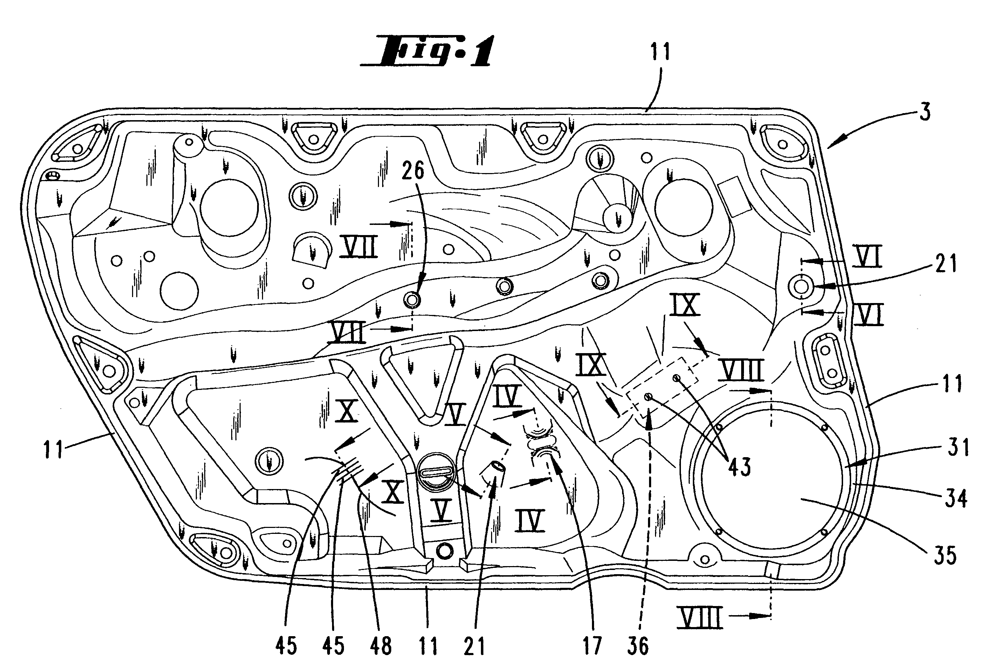

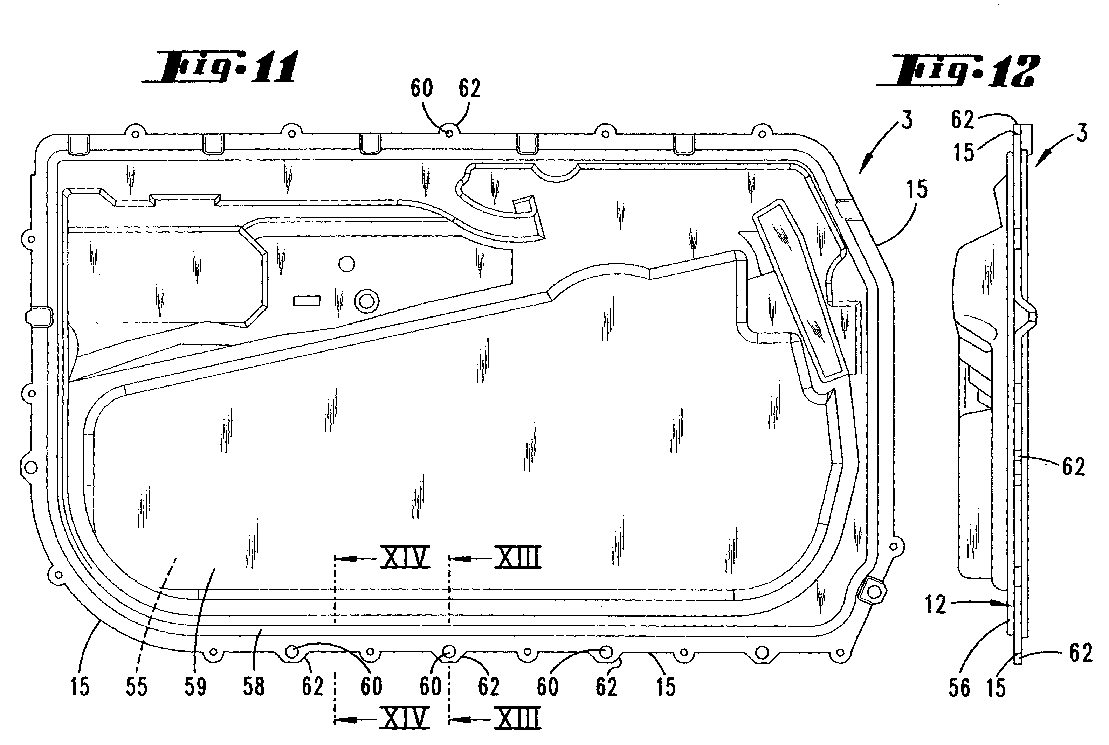

Verweisend auf Figur 10, ist eine Brücke 45 dargestellt. Die ist am Türinnenelement 3 spritztechnisch ausgeformt. Die Brückenunterseite 46 liegt frei. Es handelt sich um freigeschnittene und aus der allgemeinen Plattenebene herausgedrückte Schlaufen. Die belassen ein Auge 47, beispielsweise zum Durchfädeln eines Kabels, oder wie in Figur 10 dargestellt, Bowdenzugs 48. Die entsprechende Schnittstruktur geht auch aus Figur 1 hervor, und zwar im Bereich der Schnittangabe X-X dieser Figur.

Die als Innenbogen mit abfallenden Schrägen dargestellte Brückenunterseite 46 kann Nasen aufweisen auch zur seitlichen Abstützung des Bowdenzuges 48 (nicht dargestellt).

Bedarfsweise läßt sich die nicht vom Querschnitt des Bowdenzuges 48 eingenommene Zwickelpartie beidseitig durch Dichtmasse verschließen.

Wie Figur 2 schließlich entnehmbar, ist dort im Mittelbereich ein Wandungsversatz 49 realisiert. Der geht fahrraumseitig der Kraftfahrzeugtür 1. Auf diese Weise ist am Türinnenelement 3 ein Lageweg 50 erzeugt, beispielsweise zur Einlagerung eines Stabilisierungselements in Form eines leistenförmigen Einsatzes 51 aus Stahl. Der Lageweg ist eine einen trapezförmigen Querschnitt aufweisende Rinne.

Diese und andere hochverfestigte Partien wie auch die Trägerplatte 36 bilden eine gute Basis für die Installation von Fensterkurbeleinrichtung und deren Spindelstrecken, Heber, etc.

Das Türinnenelement 3 kann an der Tragschulter 10 verschraubt sein. Auch eine Klebeverbindung ist anwendbar.

Die ab Fig. 11 wiedergegebene Variante des Türinnenelements 3 besteht gleichfalls aus Spritzschäummaterial. Es ist auf Material der großen Gruppe der Thermoplaste zurückgegriffen. Dazu gehören z.B. PP, PA, ABS, PET, PC+ PBT usw. Um spezielle Materialeigenschaften zu erzielen, werden zwei PP Typen miteinander verbunden. Die Basiskomponente, bis ca. 90%, besteht dabei aus einem Copolymer. Generell weisen die Block-Copolymere mit niederen a Olefinen, vorzugsweise Ethylen, bessere Werte bei der Schlagzähigkeit auf. Um die Schmelzestabilität der Copolymeren zu erhöhen wird der Basiskomponente ein HMS (high melt strength) Polymer auf PP-Basis beigemengt. Durch dieses strukturisomere Propylenpolymer wird das Verarbeitungsfenster verbreitert und ein stabiles Zellenwachstum bei gleichmäßiger Zellengröße realisiert.

Sodann sind dem Spritzschäummaterial, d.h. den Polymerwerkstoffen Füll- bzw. Versträrkungsstoffe beigemengt. Es handelt sich um bis zu 20% Glasfasern bzw. Talkum. Durch solche Verstärkungsstoffe wird die Steifigkeit des Bauteil verbessert.

Der auch bei diesem Türinnenelement 3 zugrundeliegende sandwichartige Aufbau des spritzgeschäumten Bauteils setzt auf Ebenen unterschiedlicher Dichte. Das verkörpert sich konkret darin, daß die Dichte des Türinnenelements 3 über einen Querschnitt zunächst in einer ungeschäumten Randschicht 52 zwischen 0,7 und 1,4 g/cm³ beträgt. Randschicht 52 meint die durch die Breitflächen des Bauteils eingenommenen Bereiche und nicht die Stirnfläche, die oben im Text mit 15 bezeichnet ist, aber selbst auch durch Weiterführung der Randschicht 52 dort geschlossen ist. Dieser Stirnschicht, das periphere Hinterland der Stirnfläche 15 also, trägt das Bezugszeichen 53. Die Dichte des durch die beiden massiven Randschichten 52 und die umlaufende Stirnschicht 53 eingeschlossenen Kerns des Türinnenelements 3, vorliegend als geschäumte poröse Mittelschicht 54, beträgt dagegen 0,1 bis 0,6 g/cm³.

Die Schaumstruktur des thermoplastischen Schaumgusses weist eine überraschend hohe Homogenität auf, die zur massiven Randschicht 52 hin nahezu grenzflächenartig endet, so daß hier die erstrebte periphere Hartschale allseitig geschlossen ist.

Während die massive Randschicht 52, einschließlich der Stirnschicht 53 natürlich, nicht ohne weiteres durchdringbar ist, läßt sich die dicht eingekapselte poröse Mittelschicht 54 mit relativ moderaten Kräften durchstechen, -schneiden, also durchdringen. Der hieraus zu ziehende Nutzen wird weiter unten näher erörtert.

Der erzielte hohe E-Modul der Randschichten wird schon bei vergleichsweise geringem Dickenanteil derselben erreicht. So genügen schon diesbezügliche Dicken von 0,4 und 0,7 mm bei einer Gesamtdicke des Bauteils von ca. 5 mm. Die Werte für die Steifigkeit liegen bei solchen Randschichten 52 bei 2500 N/mm². Auf die Mittelschicht 54 entfällt immerhin noch ein Wert von 600 N/mm².

Das alles stellt die Basis für eine einwandfreie tragende Bestückung durch die üblichen in der Fahrzeugtür 1 aufgenommenen Bauteile, wie Lautsprecher, Lautsprecherbox, Kabelhalterung 17, Kabel 18 um nur einige zu nennen.

Was den Dichtkörper 12 betrifft, so ist dieser nun als robotergesteuerte Spur auf das Türinnenelement 3 gelegt. Dazu ist der Dichtkörper 12 als auf einer Breitfläche 55 des Türinnenelements 3 aufgebrachte, endgeschlossene Raupe ausgebildet. Es handelt sich um einen Schaumkörper mit sich integral bildender, hochelastischer Haut 56. Es sei auf Fig. 13 verwiesen. Die Haut 56 ist dort als einfache Begrenzungslinie wiedergegeben. Zur guten Verankerung des Dichtkörpers 12 reicht der hier im Querschnitt pilzförmige Korpus desselben aus, dessen Fuß in eine von der Breitfläche 55 ausgehende Nut 57 reicht. Letztere ist bei Spritzschäumverfahren gleich mit berücksichtigt. Nutformgebend ist die auf dieser Seite, der Breitfläche 55 also liegende Randschicht 52 des Bauteils. Flanken und Boden der Nut 57 sind so stabil, auch noch abgestützt durch den selbst recht widerstandsfähigen Kern des Schäumspritzlings, also der Mittelschicht 54.

Im Legebereich des Dichtkörpers 12 liegen stabilisatorisch beste Verhältnisse vor, da die Nut 57 durch Wandungsversatz gebildet ist. Es findet so keine Dickenabnahme des Bauteils statt. Vielmehr entsteht durch Wandungsversatz unter Ausformung eine Wulst 58. Die liegt auf der Rückseite, der anderen Breitfläche 59 des Türinnenelements 3 also.

Erkennbar weist die Wulst 58 eine die lichte Breite der Nut 57 auffallend übertreffende Breite auf. Das Verhältnis liegt etwa bei 1:2.

Die Wulst 58 ist durchgehend höhengleich und verläßt diese Ebene nur dann, wenn die korrespondierende Anschlagfläche, gestellt von der Tragschulter 10 der Abstufung 9 des Türinnenbleches 5 der Kraftfahrzeugtür 1, diesbezüglich abweicht. Die Nut 57 ist von solcher geraden Tiefe, daß der von der eingerückten massiven Randschicht 52 gestellte Boden im wesentlichen ebenengleich mit der auf der Rückseite liegenden Randschicht 52 fluchtet.

Die Verankerung des Fußes des Dichtkörpers 12 wird durch die Haftkraft der Berührungsflächen begünstigt. Es kommt gleichsam zu einer thermoplastischen Anbindung des aus Weichschaum bestehenden Dichtkörpers 12.

Die die beschriebene Dichtkörperzuordnung wiedergebende Figur 13 zeigt im Verein mit Fig. 11 eine besondere Lochung zum Durchgriff von Befestigungselementen. Fig. 11 zeigt im Bereich der Schnittangabe XIII-XIII, daß stirnflächenseitig unregelmäßig auf die Peripherie des Türinnenelement 3 verteilt Verankerungsdurchbrüche 60 ausgebildet sind. Obwohl es sich um Lochungen oder Laserstrahl-Freischnitte handeln könnte, sind die dargestellten Durchbrüche 60 gleich im Zuge des Spritzschäumverfahrens gebildet. Der Innenraum der Durchbrüche 60 (vgl. auch Fig. 13) unterliegt so den gleichen harthautbildenden Bedingungen wie bezüglich der Randschichten 52 und der Stirnschicht 53 eingehend geschildert. Mit anderen Worten: Die durch integrales Ausformen erzeugten Verankerungsvorsprünge 60 erhalten eine massive, stabilisierende Lochauskleidung 61. Die ist gleichsam als hülsenförmiger Abschnitt realisiert und stellt eine feste, hohlnietartige Materialbrücke zwischen den beiden durch die Mittelschicht 54 beabstandeten Randschichten 52 dar. Die Übergangskanten sind querkonvex gerundet. Auf diese Weise wird durch Einziehen eines Befestigungselements, wie bspw. einer Schraube, das Bauteil nicht bzw. bei überhöhten Kräften nicht so leicht zusammengequetscht. Vielmehr entsteht durch Rückstellkraft eine Federspannwirkung. Das trägt zur Sicherung der Befestigung bei. Die besagten Verankerungsdurchbrüche 60 bilden schichtverbindende Anker mit äußerst stabilisierender Wirkung. Die Stabilisierung erstreckt sich, durch die enge Nähe zur Nut 57, sogar auf Halterungszone des Dichtkörpers 12. Es kommt gleichfalls zu einer gegenseitigen Stabilisierung der gesamten Peripherie des Spritzschaumkörpers.

Wie weiter Fig. 11 entnehmbar, ist ein Verankerungsdurchbruch 60 von einem stirnflächenseitig auskragenden, gleichfalls integral geschäumten Laschenabschnitt 62 umgeben. Solche Laschenabschnitte 62 stehen auswärtsgerichtet ab. Es kann sich um halbkreisförmige oder trapezförmige erkerartige Flanschlaschen handeln. Die bieten eine so große Umfläche, daß der Achspunkt der in aller Regel bezüglich der Lochkontur kreisrunden Verankerungsdurchbrüche 60 mit der Stirnfläche 15 des Türinnenelements 3 fluchtet. Solche Verankerungsdurchbrüche 60 oder auch sonstige Durchbrüche im Gesamtfeld des Türinnenelements 3 sind auch hier mit den üblichen Buchsen, Gewindeeinsätzen etc. versehen, bevorzugt durch umspritzendes Einbinden solcher Elemente. Hierzu sind ausgiebige Ausführungen zur Grundversion gemacht.

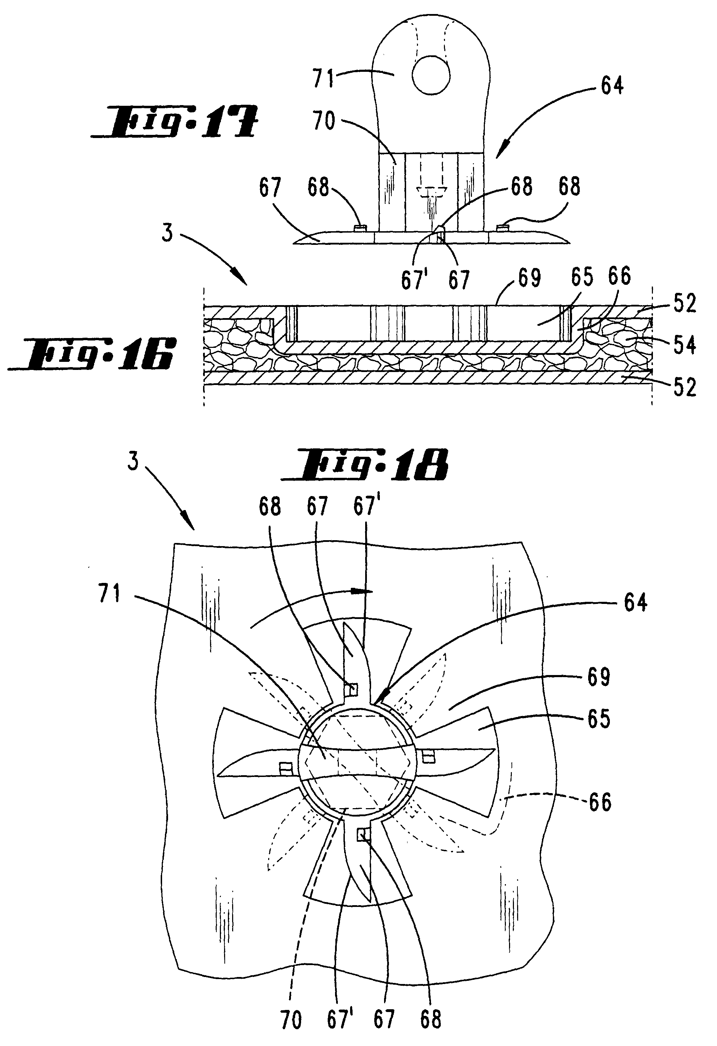

Fig. 15 zeigt noch eine Besonderheit am Türinnenelement 3 insofern, als dort an der Breitfläche 59, der Rückseite des Türinnenelements 3 also, eine auffallende Materialanhäufung 63 vorgenommen ist, und zwar zur Schaffung einer genügenden Verschraubungstiefe für in Zuordnungsrichtung nicht frei austretende Befestigungselemente. Die Randschicht 52 umschreibt die entsprechende Ausbeulung in domartiger Gestalt. Die auf der anderen Seite liegende Randabschicht 52 geht dagegen planparallel durch. Solche partiellen Materialanhäufungen sind auch bezüglich der Grundversion angewandt und dort erläutert. Es sei auf die Figuren 4 und 9 verwiesen. Dort allerdings im Zusammenhang mit der Schaffung einer einwandfreien Verankerung der Trägerplatte 36 an einer Randschulter 40, deren Inneneckbereich zu 39 hin querschnittsdicker ausfällt als die übrige Dicke des im Grunde plattigen Türinnenelements 3 beträgt.

Während durchgehende Verankerungsdurchbrüche 60 im Grunde nur außerhalb der Grenzen des Dichtkörpers 12 vorgenommen sind, sind nicht durchgehende Verankerungsdurchbrüche im durch den Dichtkörper 12 umschriebenen Innenfeld des Türinnenelements 3 realisiert. So bleibt die scheidewandartige Dichtwirkung des Türinnenelements 3 komplett erhalten. Der Feuchteübertritt ist unterbunden.

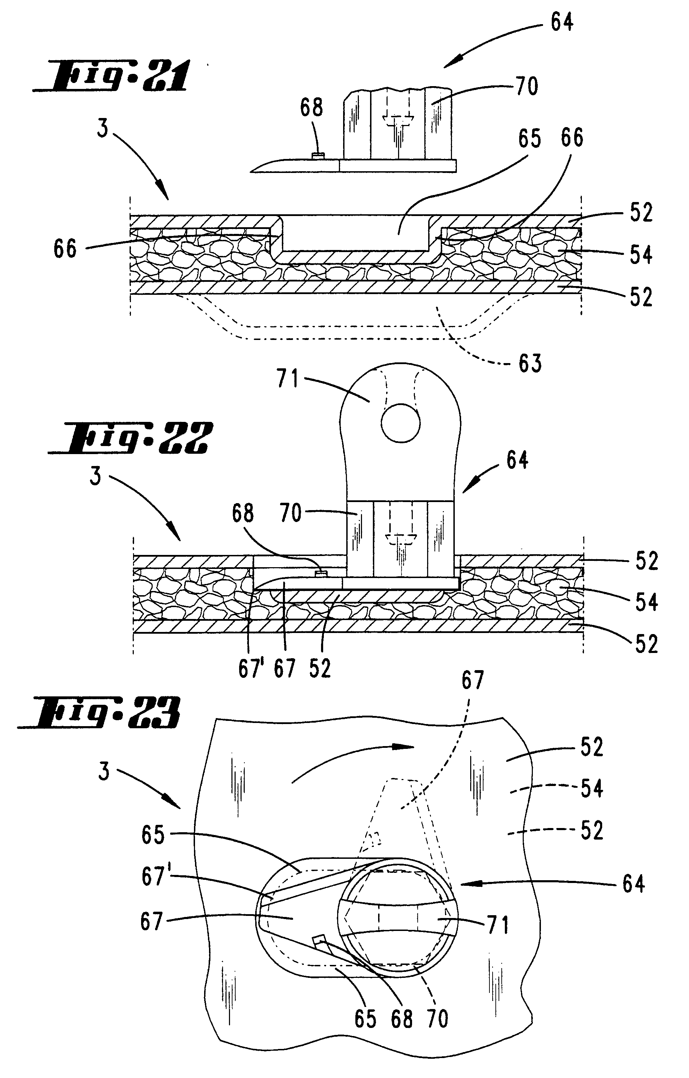

Die Plazierung entsprechender Verankerungsmittel 64, es kann sich um Kabelhalterungen, Bowdenzugführungen etc. handeln, wird auf zwei verschiedene Arten erreicht. Die eine besteht darin, daß in dem Türinnenelement 3 breitflächenseitig ein teilweiser Materialabtrag durch Fräsen vorgenommen wird. Diese Situation ist in Fig. 21 bis 23 wiedergegeben. Die Bezugsziffern sind, soweit schon erörtert, sinngemäß angewandt, dies zum Teil ohne textliche Wiederholungen. Beim Spritzschäumvorgang wird dazu von der gewünschten Breitfläche her eine in die Mittelschicht 54 reichende Depression erzeugt. Es handelt sich, wie aus den Fig. 21 und 23 ersichtlich, um einen langlochartigen Trog 65. Der Trog 65 reicht bis kurz vor die in Fig. 21 unterseitig liegende massive Randschicht 52, dies so, daß noch Schaumstruktur des Mittelabschnitts 54 vorliegt. Durch Einführen eines nicht dargestellten Fräsers wird die quer zur allgemeinen Erstreckungsrichtung des Türinnenelementes 3 ausgerichtete, ovale Trogwand 66 weggefräst. Ein passendes Verankerungsmittel 64 wird eingeführt und nach Steckdrehzuordnung liegt die erstrebte Verankerung vor. Das Eindrehen geschieht über recht moderate Kräfte, da der Zugang zur porösen Mittelschicht 54 geringerer Dichte durch den Fräser freigemacht ist.

Der in diese Struktur eintretende, bzw. eindringende Anker 67 ist zugleich das planparallel zur Erstreckungsrichtung des Türinnenelements 3 wirkende Messer 67'. Der Messerrücken kann einen abragenden Widerhaken 68 aufweisen. Der wirkt einem Zurückdrehen des Ankers 67 sperrend entgegen.

Will man eine größere Eindringtiefe für den Anker 67 bereithalten, so kann die aus Fig. 21 ersichtliche partielle Materialverdickung an Schaummasse vorgenommen sein, indem dort die oben schon angesprochene Materialanhäufung 63 vorgenommen wird durch nach auswärts verspringendes Ausstellen der zuordnungsabgewandten Randschicht 52 zum Trog 65 hin.

Gemäß Fig. 21 bis 23 handelt es sich bezüglich des Verankerungsmittels 64 um einen nur einen Anker aufweisenden Gegenstand.

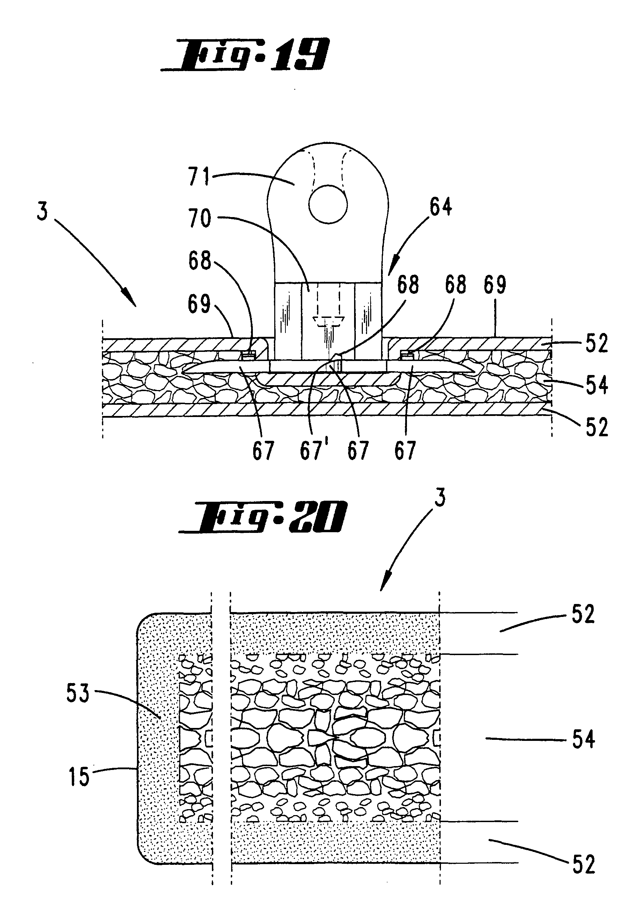

Anders stellt sich die Situation gemäß Fig. 17 bis 20 dar, verkörpernd die andere Art der Verankerungsmittelzuordnung. Hier ist der Trog 65 in Form eines Tatzenkreuzes gestaltet. Es handelt sich gleichsam um einen Kreuztrog. Auf spanabhebende Bearbeitung ist hier jedoch verzichtet. Der Trog 65 bleibt wie eingeformt. Vielmehr ist hier so vorgegangen, daß in dem Türinnenelement 3 bspw. in Form eines Klipses ausgebildete Verankerungsmittel 64 unter Belassung der integralen Außenhaut befestigt sind. D.h. weder die zugangsseitige Randschicht 52 wird trognah abgetragen, noch die Trogwand 66. Der passend gestaltete Anker ist gleichfalls kreuzförmig gestaltet. Seine vier winkelgleich verteilt liegenden Anker 67 respektive Messer 67' greifen unter die stehengebliebenen Restpartien 69 des Spritzschäumlings, wobei sie sich selbst den Weg durch die Trogwand 66 freischneiden. Die Rückstellkraft der Trogwand 66 ergibt sogar wieder ein zumindest partielles Schließen der Schnittpforte. Auch hier ist der vom Anker 67 quer abragende Widerhaken 68 verwirklicht. Insgesamt liegt hier ein zentrum-orientiertes Grabensystem für den selbstschneidenden Seitenflankeneintritt des kreuzförmigen Drehankers des Verankerungsmittels vor.

Der von der Ebene der Anker 67 ausgehende, über den Trogrand freiragende Sockel 70 des kreuzförmigen Ankers 67 ist mantelwandseitig unrund, so daß durch Ansetzen eines Drehhilfswerkzeuges das Einsetzen des Verankerungsmittels 64 noch erleichtert ist. Die unrunde Querschnittsgestalt kann bis zu einer hexagonalen gehen, so daß sogar Maulschlüssel eingesetzt werden können.

Eine Einteiligkeit des Sockels 70 mit einem koaxial anschließenden Klips 71 ist unnötig. Der abgeflachte Klips 71 wird dann auch nicht als Betätigungshandhabe genutzt. Er ist dem Sockel 70 drehverbunden. Das hat auch den Vorteil, daß man den Klips 71 auf den zu greifenden Gegenstand, wie bspw. einen Bowdenzug, bequem ausrichten kann. Die Lage bzw. Dreh-Endstellung des Sockels 70 ist drehwinkelmäßig daher unbedeutend.

Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Türinnenelement (3) für Kraftfahrzeugtüren (1) zur Anordnung zwischen einer Türaußenseite und einer inneren Verkleidung (7), wobei randseitig ein Dichtkörper (12) angebracht ist, **dadurch gekennzeichnet, daß** das Türinnenelement (3) im Spritz-Schäumverfahren hergestellt ist und im Hinblick auf einen Querschnitt zwei massive Randschichten (52) und eine geschäumte poröse Mittelschicht (54) aufweist.

2. Türinnenelement nach Anspruch 1, **dadurch gekennzeichnet, daß** an dem Türinnenelement (3) Kabelhalterungen (17) angeformt sind.

3. Türinnenelement nach Anspruch 1 oder 2, **dadurch gekennzeichnet, daß** ein Halterungskragen (31), zur Halterung eines Lautsprechers (32), angeformt ist.

4. Türinnenelement nach einem der Ansprüche 1 bis 3, **dadurch gekennzeichnet, daß** eine Kabeldurchführung (21) ausgeformt ist.

5. Türinnenelement nach Anspruch 4, **dadurch gekennzeichnet, daß** die Kabeldurchführung (21) eine Umrandung (24) aus Weichkunststoff aufweist.

6. Türinnenelement nach einem der Ansprüche 1 bis 5, **dadurch gekennzeichnet, daß** das Türinnenelement (3) eine eingespritzte Buchse (26) aufweist.

7. Türinnenelement nach einem der Ansprüche 1 bis 6, **dadurch gekennzeichnet, daß** das Türinnenelement (3) eine eingelegte Trägerplatte (36) zur Halterung eines Motors (37) aufweist.

8. Türinnenelement nach Anspruch 7, **dadurch gekennzeichnet, daß** die Trägerplatte (36) eine Metallplatte ist.

9. Türinnenelement nach einem der Ansprüche 1 bis 8, **dadurch gekennzeichnet, daß** das Türinnenelement (3) spritztechnisch ausgeformte Brücken (45) aufweist, deren Brückenunterseite (46) freiliegt.

10. Türinnenelement nach einem der Ansprüche 1 bis 9, **gekennzeichnet durch** einen partiellen Wandungsversatz (49) des Türinnenelements (3) als Legeweg für einen leistenförmigen Einsatz (51).

11. Türinnenelement nach einem der Ansprüche 1 bis 10, **dadurch gekennzeichnet**, das der Dichtkörper (12) als auf einer Breitfläche (55) des Türinnenelements (3) aufgebrachte Raupe ausgebildet ist.

12. Türinnenelement nach einem der Ansprüche 1 bis 11, **dadurch gekennzeichnet, daß** der Dichtkörper (12) in einer integral eingeformten Nut (57) einliegt.

13. Türinnenelement nach den Ansprüchen 11 und 12, **dadurch gekennzeichnet, daß** die Nut (57) durch Wandungsversatz unter Ausformung einer spritzgeschäumten Wulst (58) auf der Rückseite, der anderen Breitfläche (59) also, gebildet ist.

14. Türinnenelement nach einem der Ansprüche 1 bis 13, **dadurch gekennzeichnet, daß** die Dichte des Türinnenelements (3) über einen Querschnitt unterschiedlich ist, nämlich in der ungeschäumten Randschicht (52) zwischen 0,7 und 1,4 g/cm³ beträgt und in der geschäumten Mittelschicht (54) 0,1 bis 0,6 g/cm³.

15. Türinnenelement nach einem der Ansprüche 1 bis 14, **dadurch gekennzeichnet, daß** das Spritzschäummaterial einen Anteil eines HMS-Polymers aufweist.

16. Türinnenelement nach einem der Ansprüche 1 bis 15, **dadurch gekennzeichnet, daß** das Spritzschäummaterial Füll- oder verstärkungsstoffe aufweist.

17. Türinnenelement nach einem der Ansprüche 1 bis 16, **dadurch gekennzeichnet, daß** stirnflächenseitig Verankerungsdurchbrüche (60) vorgenommen sind, die durch integrales Ausformen eine in Durchbrechungsrichtung liegende massive Lochauskleidung (61) aufweisen.

18. Türinnenelement nach einem der Ansprüche 1 bis 17, **dadurch gekennzeichnet, daß** ein Verankerungsdurchbruch (60) von einem stirnflächenseitig auskragenden, integral geschäumten Laschenabschnitt (62) umgeben ist.

19. Türinnenelement nach einem der Ansprüche 1 bis 18, **dadurch gekennzeichnet, daß** in dem Türinnenelement (3) Buchsen (26) umspritzt eingebunden sind.

20. Türinnenelement nach einem der Ansprüche 1 bis 19, **dadurch gekennzeichnet, daß** in dem Türinnenelement (3) breitflächenseitig ein teilweiser Materialabtrag oder ein nicht durchgehendes Schneiden vorgenommen ist unter Schaffung eines Zugangs zur Mittelschicht (54) geringerer Dichte.

21. Türinnenelement nach Anspruch 20, **dadurch gekennzeichnet, daß** die freigelegten Bereiche der Mittelschicht (54) als Zugang für Verankerungsmittel (64) dienen.

22. Türinnenelement nach einem der Ansprüche 1 bis 21, **dadurch gekennzeichnet, daß** in dem Türinnenelement (3) Klipse (71) unter Belassung einer integralen Außenhaut befestigt sind.

## Claims

1. Door internal element (3) for motor vehicle doors (1), to be arranged between a door outer side and an inner lining (7), in which a sealing body (12) is disposed at the edge, **characterized in that** the door internal element (3) is produced using the foam injection moulding process and with regard to a cross section has two solid boundary layers (52) and a foamed, porous central layer (54).

2. Door internal element according to claim 1, **characterized in that** cable holders (17) are moulded onto the door internal element (3).

3. Door internal element according to claim 1 or 2, **characterized in that** a mounting collar (31) for holding a loudspeaker (32) is moulded on.

4. Door internal element according to any of the claims 1 to 3, **characterized in that** a cable bushing (21) is moulded out.

5. Door internal element according to claim 4, **characterized in that** the cable bushing (21) has an edging (24) made from soft plastics.

6. Door internal element according to any of the claims 1 to 5, **characterized in that** the door internal element (3) has a moulded-in bush (26).

7. Door internal element according to any of the claims 1 to 6, **characterized in that** the door internal element (3) has an inserted support plate (36) for mounting a motor (37).

8. Door internal element according to claim 7, **characterized in that** the support plate (36) is a metal plate.

9. Door internal element according to any of the claims 1 to 8, **characterized in that** the door internal element (3) has bridges (45) which are moulded out by the injection-moulding technique and the underside (46) of which is exposed.

10. Door internal element according to any of the claims 1 to 9, **characterized by** a partial wall offset (49) in the door internal element (3) as a laying path far a strip-like insert (51).

11. Door internal element according to any of the claims 1 to 10, **characterized in that** the sealing body (12) is formed as a bead which is applied to a wide face (55) of the door internal element (3).

12. Door internal element according to any of the claims 1 to 11, **characterized in that** the sealing body (12) is located in an integrally formed groove (57).

13. Door internal element according to claims 11 and 12, **characterized in that** the groove (57) is formed by means of a wall offset so as to mould out a foam injection moulded bead (58) on the rear side, that is to say the other wide face (59).

14. Door internal element according to any of the claims 1 to 13, **characterized in that** the density of the door internal element (3) varies over a cross section, that is to say is between 0.7 and 1.4 g/cm³ in an unfoamed boundary layer (52) and is between 0.1 and 0.6 g/cm³ in the foamed central layer (54).

15. Door internal element according to any of the claims 1 to 14, **characterized in that** the foam injection moulded material contains a proportion of an HMS polymer.

16. Door internal element according to any of the claims 1 to 15, **characterized in that** the foam injection moulded material contains fillers or reinforcing substances.

17. Door internal element according to any of the claims 1 to 16, **characterized in that** anchoring apertures (60) are provided on the end face, which anchoring apertures have a solid hole lining {61) lying in the direction of the aperture as a result of integral moulding-out.

18. Door internal element according to any of the claims 1 to 17, **characterized in that** an anchoring aperture (60) is surrounded by an integrally foamed tab section (62) which projects on the end face.

19. Door internal element according to any of the claims 1 to 18, **characterized in that** bushes are incorporated in the door internal element (3) by injection moulding around them.

20. Door internal element according to any of the claims 1 to 19, **characterized in that** some of the material is removed, or a cut which does not run all the way through is made, in the door internal element (3) on the wide face side, so as to provide access to the lower-density central layer (54).

21. Door internal element according to claim 20, **characterized in that** the exposed regions of the central layer (54) serve as access for anchoring means (64).

22. Door internal element according to any of the claims 1 to 21, **characterized in that** clips (71) are secured in the door internal element (3), leaving an integral outer skin.

## Revendications

1. Elément intérieur de portière (3) pour portière de véhicule automobile (1) à disposer entre un côté extérieur de portière et un revêtement intérieur (7), où un élément d'étanchéité (12) est placé du côté du bord, **caractérisé en ce que** l'élément intérieur de portière (3) est fabriqué selon le procédé de l'injection - moussage et présente deux couches de bordure (52) massives en ce qui concerne un profil transversal, et une couche du milieu (54) poreuse moussée.

2. Elément intérieur de portière selon la revendication 1, **caractérisé en ce que** des attaches de câbles (17) sont formées sur l'élément intérieur de portière (3).

3. Elément intérieur de portière selon l'une quelconque des revendications 1 ou 2, **caractérisé en ce qu'**une collerette de fixation (31) pour la fixation d'un haut-parleur (32) est formée dessus.

4. Elément intérieur de portière selon l'une quelconque des revendications 1 à 3, **caractérisé en ce qu'**une traversée de câble (21) est formée.

5. Elément intérieur de portière selon la revendication 4, **caractérisé en ce que** la traversée de câble (21) présente une bordure (24) en matière synthétique souple.

6. Elément intérieur de portière selon l'une quelconque des revendications 1 à 5, **caractérisé en ce que** l'élément intérieur de portière (3) présente une douille injectée (26).

7. Elément intérieur de portière selon l'une quelconque des revendications 1 à 6, **caractérisé en ce que** l'élément intérieur de portière (3) présente une plaque de support (36) insérée pour le support d'un moteur (37).

8. Elément intérieur de portière selon la revendication 7, **caractérisé en ce que** la plaque de support (36) est une plaque en métal.

9. Elément intérieur de portière selon l'une quelconque des revendications 1 à 8, **caractérisé en ce que** l'élément intérieur de portière (3) présente des ponts formés selon la technique de l'injection, dont la face inférieure de pont (46) est à découvert.

10. Elément intérieur de portière selon l'une quelconque des revendications 1 à 9, **caractérisé par** un désalignement de paroi (49) partiel de l'élément intérieur de portière (3) en tant que chemin de pose pour un insert (51) en forme de listel.

11. Elément intérieur de portière selon l'une quelconque des revendications 1 à 10, **caractérisé en ce que** l'élément d'étanchéité (12) est réalisé en tant que bourrelet appliqué sur une surface large (55) de l'élément intérieur de portière (3).

12. Elément intérieur de portière selon l'une quelconque des revendications 1 à 11, **caractérisé en ce que** l'élément d'étanchéité (12) est inséré dans une rainure (57) intégralement moulée.

13. Elément intérieur de portière selon les revendications 11 et 12, **caractérisé en ce que** la rainure (57) est formée par un désalignement de paroi en formant un bourrelet moussé par injection (58) sur le côté arrière, c'est-à-dire l'autre surface large (59).

14. Elément intérieur de portière selon l'une quelconque des revendications 1 à 13, **caractérisé en ce que** la masse volumique de l'élément intérieur de portière (3) est variable sur un profil transversal, à savoir de 0,7 à 1,4 g/cm³ dans la couche de bordure (52) non moussée, et de 0,1 à 0,6 g/cm³ dans la couche du milieu (54) moussée.

15. Elément intérieur de portière selon l'une quelconque des revendications 1 à 14, **caractérisé en ce que** le matériau de moussage par injection présente une part d'un polymère HMS.

16. Elément intérieur de portière selon l'une quelconque des revendications 1 à 15, **caractérisé en ce que** le matériau de moussage par injection présente des matières de remplissage ou de renforcement.

17. Elément intérieur de portière selon l'une quelconque des revendications 1 à 16, **caractérisé en ce que** des passages d'ancrage (60) ont été entrepris du côté de la surface frontale, lesquels présentent un revêtement de trou (61) massif situé en direction de passage grâce au moulage intégral.

18. Elément intérieur de portière selon l'une quelconque des revendications 1 à 17, **caractérisé en ce qu'**un passage d'ancrage (60) est entouré par une partie à languette (62) intégralement moussée qui déborde du côté de la surface frontale.

19. Elément intérieur de portière selon l'une quelconque des revendications 1 à 18, **caractérisé en ce que** des douilles (26) sont intégrées par extrusion dans l'élément intérieur de portière (3).

20. Elément intérieur de portière selon l'une quelconque des revendications 1 à 19, **caractérisé en ce que** dans l'élément intérieur de portière (3), du côté de la surface large, l'on procède à un enlèvement partiel de matériau ou à une découpe n'allant pas jusqu'au bout, en créant un accès vers la couche du milieu (54) de plus faible masse volumique.

21. Elément intérieur de portière selon la revendication 20, **caractérisé en ce que** les zones mises à découvert de la couche du milieu (54) servent d'accès pour des moyens d'ancrage (64).

22. Elément intérieur de portière selon l'une quelconque des revendications 1 à 21, **caractérisé en ce que** des clips (71) sont fixés dans l'élément intérieur de portière (3) en laissant une membrane extérieure intégrale.
